# EUROPEAN PATENT SPECIFICATION

(11) **EP 1 219 906 B1**
(45) Date of publication and mention of the grant of the patent: **02.08.2006**
(21) Application number: 01130962.2
(22) Date of filing: 28.12.2001
(51) Int. Cl.: F24H 9/20, G05D 23/02, G01F 1/06

(54) **Thermostatic control system and control method of the flow of a liquid**
Verfahren und Vorrichtung zur thermostatischen Regelung eines Flüssigkeitsstroms
Procédé et appareillage de régulation thermostatique d'un débit de liquide

(30) Priority: 29.12.2000 IT TO001231
(43) Date of publication of application: 03.07.2002
(73) Proprietor: ELTEK S.p.A., I-15033 Casale Monferrato (Alessandria) (IT)
(72) Inventor: Gaj, Renato, 15033 Casale Monferrato (AL) (IT)
(74) Representative: Dini, Roberto

(56) References cited:
- EP-A- 0 918 270
- DE-A- 3 805 441
- DE-A- 3 840 210
- DE-A- 19 541 145
- DE-B- 1 242 772
- DE-C- 686 483
- PATENT ABSTRACTS OF JAPAN vol. 007, no. 283 (M-263), 16 December 1983 (1983-12-16) & JP 58 158444 A (MATSUSHITA DENKI SANGYO KK), 20 September 1983 (1983-09-20)
- PATENT ABSTRACTS OF JAPAN vol. 007, no. 254 (M-255), 11 November 1983 (1983-11-11) & JP 58 136945 A (NORITSU KK), 15 August 1983 (1983-08-15)

## Description

The present invention refers to a thermostatic control system and a flow control method of a fluid.

As known, the valves of the thermostatic type are regulating devices, whose operation is based on appropriate shuttering means, which are moved either to open or close a fluid outlet through the piston of a thermosensing actuating device, i.e. an actuator operated by the temperature of the fluid, whose flow or flowrate should be regulated.

The above thermosensing device usually consists of a thermal actuator, i.e. an actuation device comprising a thermal conductive container, wherein a material such as wax is contained, being apt to either shrink or expand depending on the temperature reached by the container licked by the fluid; moreover, in said container is inserted at least a portion of a shaft or piston that is pushed outside the container when the wax volume increase, so as to operate the shuttering means of the valve.

Document DE 1 242 772 describes and shows a thermostatic valve assembly to be located along a pipe for water passing through a boiler. The assembly provides a pressure difference switch connected to a pipe choke in order to actuate a water warming device of the boiler.

Valves as described above are employed in wall boilers for water heating, i.e. thermostatic valves are usually of the type apt to let a substantial passage of the fluid only when the latter has reached a preset temperature.

These boilers usually have a preset power, i.e. they are fitted with an element apt to heat the flowing water up to a maximum possible temperature, said element being activated by the opening of a tap by the user; in this connection, it should be noticed that these boilers are usually manufactured so that, afterwards the opening of a hot water tap, the flow of at least a certain liquid flowrate cause starting of said heating element; when the tap is closed again and the liquid flow in the boiler stop, the heating element will be deactivated.

Common applications have the thermostatic valve assembled at the outlet of a preset power boiler, for regulating its outlet flowrate depending on the inlet water temperature.

In fact, if the inlet water to the boiler is particularly cold (as for a boiler being used in a mountain district during Winter months), the boiler preset power may not be sufficient to reach in outlet the temperature desired for the hot water.

Therefore, in these applications, the thermosensing element of the valve, containing a wax type extremely sensitive to low liquid temperatures, is immersed in the outlet water flow from the boiler to detect its initial temperature at the time the tap is opened, which is substantially equal to the inlet temperature.

If this water is below a minimum operating threshold, the wax will shrink due to the low water temperature, thus causing the valve shuttering means to move and restrict the liquid path outlet; thus, the boiler outlet flowrate will be restricted and the power of the latter be enough to ensure the desired temperature is reached.

This solution has the drawback that the thermosensing element is actually provided to operate only in those situations where the boiler has not enough power to warrant the desired temperature for the hot water is reached.

In fact, when the inlet water temperature to the boiler exceeds said operation threshold of the thermosensing element (as in the instance of the above boiler being used during Summer months), the boiler power may even be redundant and eventually cause power waste.

Other boilers are also known, which provide an inlet flowmeter for managing the heating power based on the liquid flowrate instead of a thermostatic valve on the outlet duct.

Operation of these well.known control devices is based on an impeller rotated by the water flowing inside a duct; the number of the impeller rotations, representative of the flowing liquid volume, is counted by a special detector and forms an information advice or control signal.

In a specific application to a preset power boiler, the flowmeter assembled at the boiler inlet is provided, on one side, for detecting whether the user has opened a tap and, on the other, for metering the inlet water flowrate to the boiler. The information about the water flowrate is used by an appropriate control system of the boiler for regulating the power delivered by the latter, so that said power is more possible equalling the power required.

In other words, therefore, the purpose of this arrangement is provided in view of limiting power consumption, chocking the power supplied by the boiler when a restricted water flowrate flows through and there is no need for using the highest heating power.

It should be noticed that in order to obtain such a function, the "water flowrate - required power" link should be defined in advance, so as to obtain the desired hot water temperature from the boiler outlet.

In order to define such a link, a reference temperature of the inlet water to the boiler should be assumed and its lowest predictable temperature also evaluated; knowing the outlet water temperature desired, it will be possible to size the power required based on the water flowrate.

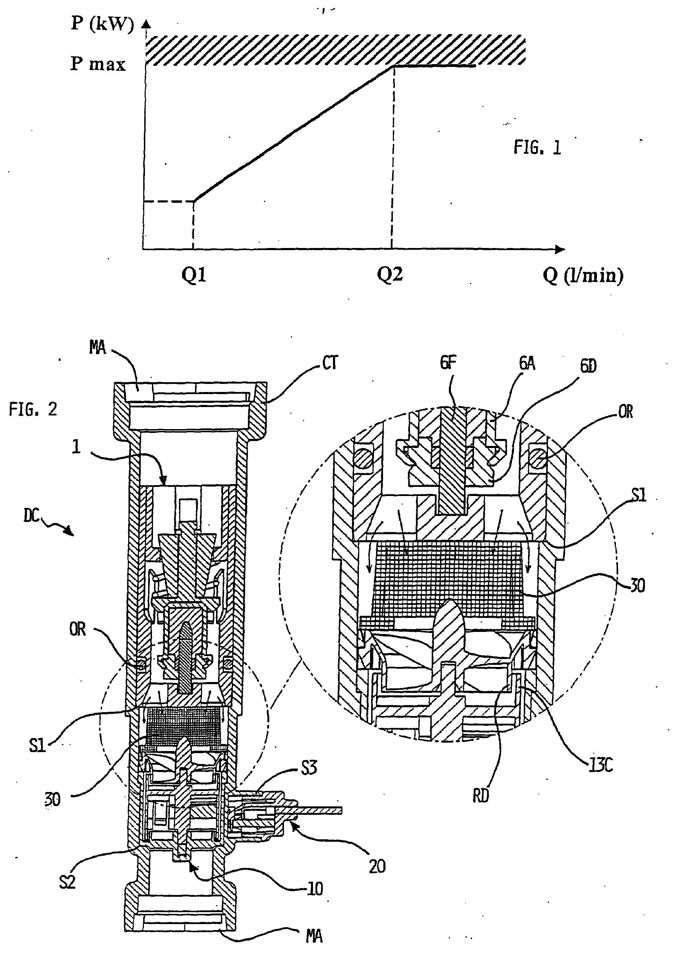

Reference is made for instance to the graphic of Fig. 1, indicating on the abscissa axis the inlet water flowrates to the boiler and on the ordinate axis the boiler heating power as a function of the various flowrates (the curve represented in Figure 1 is merely shown by way of example).

Reference Q1 indicates the minimum water flowrate causing activation of the boiler heating element, whereas Q2 indicates the flowrate for obtaining the maximum power available.

As it can be noticed, after activation of the boiler (Q1) and following increase of the water flowrate, a flowrate (Q2) is reached, so that the power required equals the maximum power supplied by the boiler (Pmax); from this flowrate onward, the boiler will always and anyway operate with the same power (Pmax) for any flowrate equal to or higher than Q2.

The above solution has the drawback that high water flowrates will always cause the boiler to operate at its maximum power. However, this highest power may not be enough to heat the water at the desired temperature, should inlet water to the boiler be extremely cold (again, should the boiler be used during Winter months in a mountain district).

Obviously, the above problems described with particular reference to a household boiler are also generally ascertainable in other applications, where operation of a device supplied with a liquid is affected by its inlet temperature.

It is the object of the present invention to solve the drawbacks of the above common technique.

In this frame, a first object of the present invention is to provide a thermostatic control system and flow control method of a fluid, being apt to optimise operation from a power standpoint of a device fed with a fluid, in particular a water heating boiler.

A second object of the present invention is to provide a thermostatic control system, which is manufactured with a minimum number of basic components.

A third object of the present invention is to provide a thermostatic control system, which can be assembled with a simple, fast and cost effective procedure, due to its restricted number of operations.

A fourth object of the present invention is to provide a thermostatic control system, which has a small size.

In order to achieve the above and further aims, as they will become apparent in the following, it is the object of the present invention to provide a thermostatic control system and a flow control method of a fluid, incorporating the features of the annexed claims, which form an integral part of the description herein.

Further objects, features and advantages of the present invention will become apparent from the following detailed description and annexed drawings, which are supplied by way of non limiting example, wherein:
- Fig. 1 shows a graphic representing the "flowrate - power" curve of a common boiler, as previously mentioned;
- Fig. 2 shows a section view of the body of a thermostatic control device according to the present invention;
- Fig. 3 shows a side view of a thermostatic valve pertaining to the device of Fig. 2;
- Fig. 4 shows a section of the thermostatic valve according to the axis B-B of Fig. 3;
- Fig. 5 shows a plan view of the thermostatic valve of Fig. 3;
- Fig. 6 shows a prospective view of the thermostatic valve of Fig. 3;
- Fig. 7 shows a partial section prospective view of the thermostatic valve of Fig. 3;
- Fig. 8 shows a partial section of the device of Fig. 2, with the thermostatic valve in a first operating condition;
- Fig. 9 shows an enlarged detail of Fig. 8;
- Fig. 10 shows a partial section of the device of Fig. 2, with the thermostatic valve in a second operating condition;
- Fig. 11 shows an enlarged detail of Fig. 10;
- Fig. 12 shows the exploded view of an impeller unit pertaining to the device of Fig. 2, in a prospective and section view, respectively.

In Fig. 2, reference DC indicates a thermostatic control device in its whole, realized according to the present invention.

The device DC comprises a tubular body CT, e.g. made from thermoplastic material, which is provided, for instance, to be interlaid between a water feeding source and the inlet connector of a boiler of the type as previously described; to this purpose the body CT has suitable connecting means MA fitted on both ends.

The inner surface of the body CT is shaped to delimit appropriate striker or positioning seats for inner components, in particular a seat S 1 for locating a thermostatic valve indicated in its whole with 1, and a seat S2 for locating an impeller unit 10 in its whole, pertaining to a flowmeter.

Moreover, the body CT delimits on its outer surface a seat S3 for fastening a detecting unit 20, pertaining to a flowmeter, whose functions will be further described.

Additionally, in Fig. 2 reference 30 indicates a diffuser element or flow stabilizer, consisting in the above example of a common filter located between the valve 1 and impeller unit 10; the filter 30, whose functions will be further described, is so shaped to have all outlet water from the thermostatic valve 1 reaching the impeller unit 10.

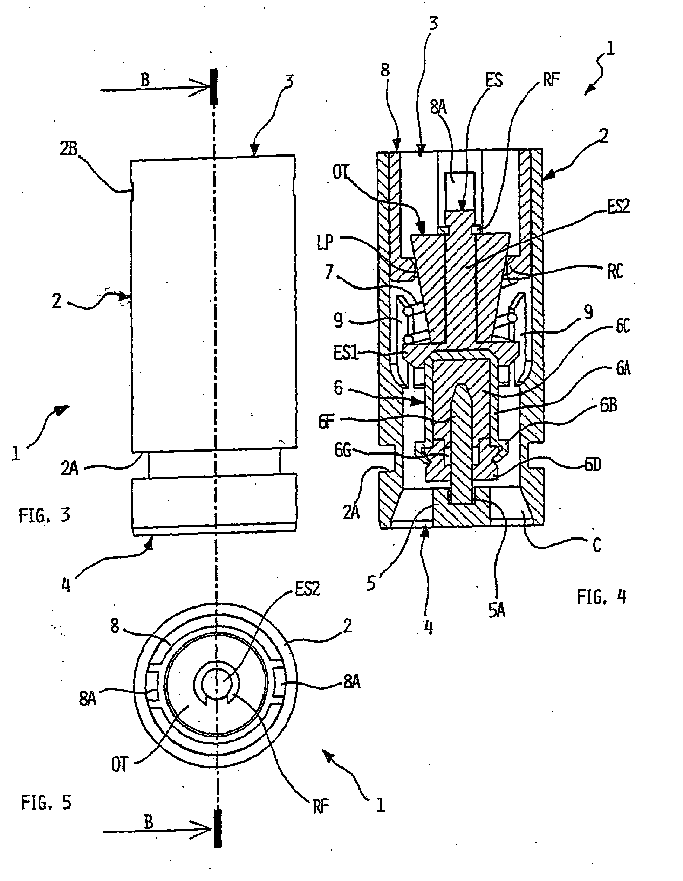

The valve 1, detailed in the Figures 3-11, has a tubular body 2, realized preferably in one single piece, e.g. in thermoplastic material, open on both ends and with a cavity C inside for housing a small number of inner components, described further on.

As it can be noticed in the Figures 3-11, a seat 2A is delimited on the outer surface of the body 2 for a sealing element, e.g. an O-ring gasket type, indicated with OR in the Figures 2, 8 and 10; it should be noticed how in the non limiting example illustrated in these figures, the body 2 forms a sort of a "fruit", being apt to be inserted in the body CT of the device according to the invention.

As it can be noticed in the Figures 3, 4 and 7, the body 2 has other seats 2B as well for hooking a component inside the body 2, as described further on.

References 3 and 4 indicate the upper opening and bottom opening of the body 2. respectively, which operate as the inlet and outlet of the fluid or liquid under control,.

On its bottom end, the body 2 delimits a supporting bridge 5, which extends crosswise to the opening 4; this bridge 5 has a seat 5A in its central or middle area.

Reference 6 indicates a thermosensing element or thermal actuator in its whole, located inside the cavity C.

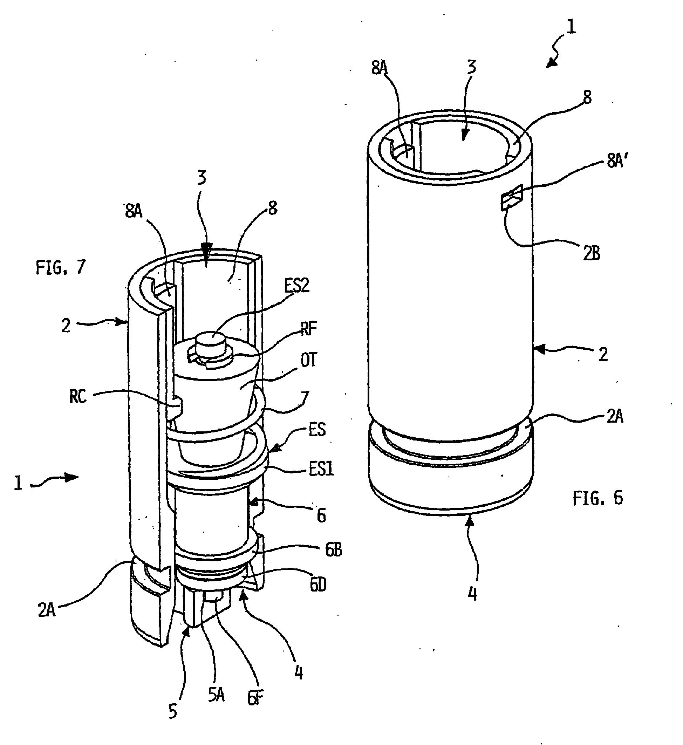

This thermal actuator 6 comprises an outer container indicated with 6A, made from thermal conductive material, such as metal, which has a substantially circular section as illustrated in Fig. 7; this figure also shows the container 6A with a peripheral flange 6B.

Inside the container 6A a chamber is delimited for a material 6C subject to volume change depending on its own temperature, such as a wax.

The above chamber is closed by a plug 6D, e.g. made from metal.

The plug 6D has an axial passage with a throughgoing thrusting element or piston indicated with 6F; a seat is further delimited inside the plug 6D for an element operating as a seal between the plug and piston 6F; this sealing element indicates with 6G can be made e.g. from Teflon® or PTFE; anyway, other sealing means not represented in the figures for simplicity's sake may be further provided, if required.

In the above example, a portion of the piston 6F is immersed in the wax 6C and the element 6G is acting as a radial seal between the piston 6F and plug 6D to prevent the wax from exiting the container 6A; the opposite end portion of the piston 6F, vice-versa, is inserted in the seat 5A of the bridge 5.

Quite schematically, for the manufacturing purposes of the thermal actuator 6, the container 6A is filled with a volumetric defined amount of wax 6C through one of its end openings; subsequently, the plug 6D, inclusive of the sealing element 6G and with the piston 6F already fitted in its axial passage, will be inserted in the above opening of the container 6A, thus closing the latter.

Now, the end of the container 6A, wherein the above opening is mechanically riveted, i.e. folded over the plug 6D (fitted with an appropriate throat to the purpose) for locking the latter in position and obtain a sealed closure of the chamber containing the wax 6C; thus, also the flange 6B of the container 6A is formed.

Reference ES indicates a supporting element in its whole, e.g. made from metal, which is solidly connected to the container 6A of the thermal actuator 6 on the opposite side to where the piston 6F is located.

The supporting element ES has a flange base ES 1 for its coupling to the container 6A, wherefrom a central shaft ES2 is arising; reference OT indicates a shuttering element, e.g. made from metal, having a substantially cone-truncated shape, which has an axial passage for its insertion on the shaft ES2 of the supporting element ES; as it can be noticed in particular from Fig. 7, near its upper end the shaft ES2 has a throat being apt to receive a washer RF, for fastening the shuttering element OT in position on the supporting element ES.

In the Figures 2-11, reference 7 indicates an elastic element, such as a spiral spring inserted in the cavity C, operating between a striker element 8 to be further described and the thermal actuator 6.

In this connection it should be noticed how according to an advantageous feature of the invention, the flange base ES 1 forms a positioning point of the spring 7 with respect to the container 6A of the thermal actuator 6.

Reference 9 indicates some centring and positioning relieves delimited on the inner surface of the body 2; in particular, the relieves 9 are provided to favour insertion of the thermal actuator 6 and spring 7 in the cavity C during assembly phases and guide the thermal actuator 6 during operation of the valve 1, though leaving a fluid outlet, as further described.

Reference 8 indicates the above striker element, which is provided for insertion inside the cavity C through the upper opening 3 of the body 2.

This striker element 8, also made in thermoplastic or metallic material, has substantially a tubular shape; the striker element 8 has elastic tongues 8A delimited in it, which can be seen in particular from the Figures 6 and 7.

These tongues 8A have hooking teeth 8A' in their outer surface, i.e. the surface facing the body 2 (see Fig. 6), being apt to engage the seats 2B delimited in the body 2.

The lower end of the striker element 8 has an axial passage for obtaining a contraction RC, wherein the shuttering element OT is inserted.

Preferably, the piston length 6F of the thermal actuator 6 is appropriately chosen or preset to have a substantial portion of the shuttering element OT inserted in the contraction RC, for determining a preset outlet path or outlet LP, having the function to always allow a minimum liquid flow; it should be noticed, in alternative to the above calibration of the piston length 6F, how the same effect would be obtained by squeezing or anyway deforming the container 6A of the thermal actuator 6.

In this application example, the function of the above minimum flow cited is to warrant the flow of a minimum liquid flowrate as required for switching the boiler heating element located upstream the device DC.

Therefore, the element OT represents a movable shuttering means, operating on the outlet path LP of the liquid.

Assembly of the thermostatic valve 1, according to the non limiting example shown in the annexed drawings, is as follows.

First of all, the thermal actuator 6 previously associated to the supporting element ES is inserted inside the body 2 from above, i.e. through the upper opening 3, so that the free end of the piston 6B will enter the seat 5A of the bridge 5; this operation is favoured by the relieves 9, duly shaped for that purpose.

Subsequently, also the spring 7 is inserted in the body 2 through the upper opening 3, until its lower end strikes the flange base ES 1 of the supporting element ES; also this operation is favoured by the relieves 9.

The striker element 8 is then partially inserted in the opening 3, minding that its lower end delimiting the contraction RC rests on the upper end of the spring 7. The element 8 is then pushed inside the cavity C contrasting the elastic reaction of the spring 7, which is compressed until the teeth 8A' of the elastic tongues 8A are coupled in the relevant seats 2B.

The shuttering element OT is then inserted on the shaft ES2, where it is fastened in position by means of the washer RF; so, the valve 1 is now assembled.

From the above description it is clear how the thermostatic valve 1 consists of a restricted number of components; it should be noticed, in fact, that the valve 1 described in the above example has just five components besides the body 2, i.e. thermal actuator 6, supporting element ES, shuttering element OT, spring 7 and striker element 8; however, nothing prevents manufacturing the supporting element ES as an integral part of the container 6A of the thermal actuator 6, should it be desired to decrease the number of single components or its hooking without the washer RF.

Of course, the smaller number of components of the valve 1 ensures a simpler manufacture and a smaller size of the device.

In addition, the above components of the valve 1 can all be inserted through one same side of the body 2, i.e. through the upper opening 3; this will considerably facilitate assembly of the device, which can be easily automated with the use of automatic machines.

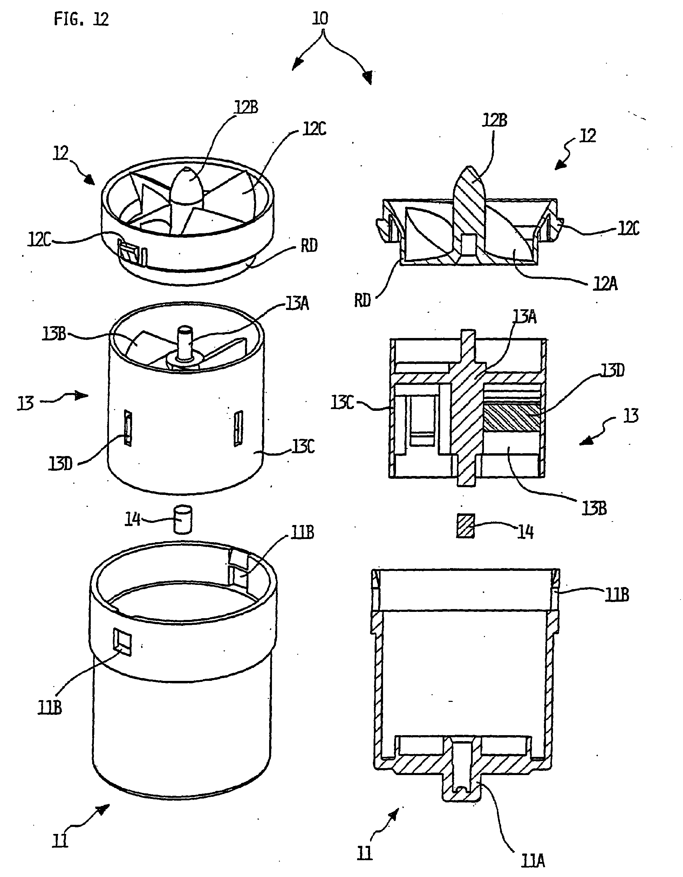

The impeller unit 10, whose manufacture is commonly known, is represented as an exploded view in Fig. 12.

This unit comprises essentially a body 11, a diffuser 12 and an impeller 13.

The body 11, substantially tubular shape, has at least a supporting cross-bar 11 A on its lower end, extending crosswise to the lower opening of the body 11.

The diffuser 12 is apt to convey the liquid flow (exiting the valve 1) directly on the impeller 13; to this purpose, the diffuser 12 has a set of helicoidal blades 12A, solidly connected to a main core 12B, which are configurated to convey said flow on the peripheral blades area of the impeller 13 underneath.

The impeller 13, which is free and axial to the body 11, has an axial pin 13A and helicoidal blades 13B; the blades 13B are joined together on their outer side by a protection ring 13C, which has energizing elements on its outer side in line with one or more blades 13B, such as magnetic elements 13D or ferromagnetic elements.

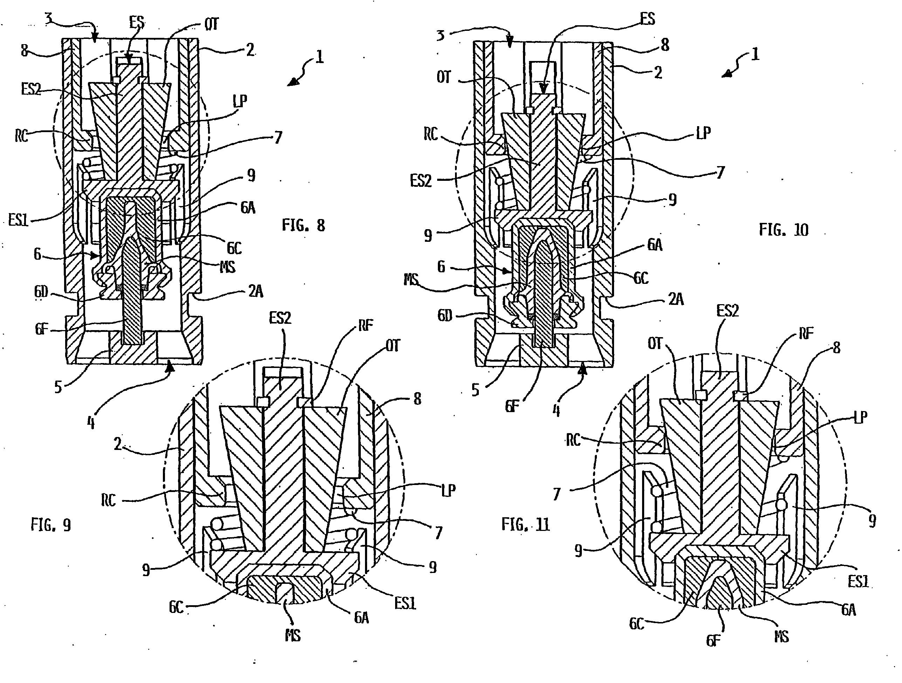

The diameter of the impeller 13 ensures a free area between the above protection ring 13C and the body 11 housing it; this free passage has a larger size than the mesh of the filter 30, to prevent the impeller 13 from being locked by small particles; as it can be seen from Fig. 10, the main core 12B of the diffuser 12 has a larger diameter than the main pin 13A of the impeller 13.

The protection ring 13C and the spreader contraction RD of the diffuser (see, in particular, the enlarged detail of Fig. 2) prevent side water straining in the area extending from the outer ends of the blades 13B of the impeller 13 to the cylindrical portion of the body 11 wherein the impeller 13 rotates freely, and possible output leakage in flow detection.

The axial pin 13A representing the rotation axis of the impeller 13, is supported at its ends by suitable means, such as bearings or thrust bushings, one of which indicated with 14: the upper bearing or bushing is housed in a suitable seat delimited in the main core 12B of the diffuser 12, whereas the lower bearing or bushing is housed in a suitable seat delimited in the underneath cross-bar 11A of the body 11.

The body 11 and diffuser 12 are configurated so that to engage each other through mutual hooking means 11B and 12C, forming a whole compact structure with the impeller 13 which ensuring an easy precise pre-assembly of the components.

As previously mentioned, on the outer surface of the body CT of the device DC according to the invention a seat S3 is delimited for the detecting unit 20. Also the concept of this unit 20 is commonly known and comprising substantially a magnetic detector in axis with the above magnetic elements 13D of the impeller 13.

Assembly of the device DC according to the invention is quite simple.

In particular, with reference to Fig. 2, the pre-assembled detecting unit 20 is inserted in the body CT from above, until it reaches its positioning seat S2; thereafter, the filter 30 is inserted in the inner cavity of the body CT until it rests on the diffuser 12 of the unit 10.

Thereafter, in the body CT is inserted the pre-assembled valve 1 with the seal ring OR, until the lower end of its body 2 rests on the filter 30 and positioning seat S1.

Finally, the detection unit 20 is fastened in its relevant seat S3.

The device DC so obtained can be connected between the water supply source and the boiler inlet, and the detection unit 20 appropriately connected according to common procedures to the control system of the boiler supplied through the device DC.

Operation of the device DC according to the invention is now described with reference to Figures 2 and 8 -11; Figures 8 - 11 do not illustrate the flowmeter 10-20, filter 30 and body CT for clarity's sake; however, also for these figures the body 2 of the valve 1 is assumed to be inserted in the body CT to let water enter the valve 1 through the opening 3 and flow out through the opening 4, where the gasket OR of Fig. 2 has a sealing function between the outer surface of the body 2 and inner surface of the duct of the body CT.

It should also be noticed how according to the embodiment of the valve 1 represented in the Figures 8-11, the piston 6F of the thermal actuator 6 is not directly immersed in the material 6C; in the example, in fact, the thermal actuator 6 comprises an inner membrane MS, of common type and fastening, apt to completely isolate the piston 6F from the area containing the material 6C.

It is now assumed to have the boiler used in an environmental condition of medium or high temperature.

With the device DC in rest condition, the thermostatic valve 1 is in the position of the Figures 8 - 9; in this condition, the shuttering element OT keeps the liquid outlet LP substantially open.

Therefore, according to the above application example, when the user of the water system opens a hot water tap, the outlet LP will let a certain water flow through; it should be noticed to this purpose, how the special flared shape of the shuttering element OT extending inside the contraction is particularly advantageous also from the fluid mechanics standpoint.

Since water temperature is higher than the switching point of the thermal actuator 6, the wax in the latter will not shrink; thus, lacking a movement of the container 6A and of the shuttering element OT, the outlet LP is not restricted (vice-versa, at the limit, the wax volume will slightly increase, causing a larger opening of the outlet LP and a greater liquid flow).

The water flow exiting from the valve 1 will flow through the filter 30 of Fig. 2, which regulates the flow and stabilizes its turbulences.

It should be noticed, in this connection, how according to the present invention, the main purpose of the filter 30 is in fact to provide a regulating and stabilizing device of the liquid flow between the valve 1 and impeller unit 10.

This functionality is based on identification of the technical problem, since when a flowmeter is integrated downstream a thermostatic valve, the latter generates hydraulic turbulences affecting negatively the metering precision of the former; following practical tests carried out by the inventor, it has resulted, in fact, how the axial impeller structure of the flowmeter is quite sensitive to the hydraulic turbulences of the inlet liquid flow.

In order to solve this problem, therefore, the thermostatic control device DC according to the invention is fitted with the filter 30, which is interlaid between the valve 1 and the impeller unit 10 of the flowmeter, so as to regulate the liquid flow and remove its turbulences.

The flow regulated by the filter 30 is then conveyed by the blades 12A of the diffuser 12 on the peripheral area of the blades 13B of the impeller 13, so as to increase the torque acting on the impeller also with low liquid flowrates.

The impeller 13 starts an angular motion caused by the liquid flowing down; this flow will then go out of the lower outlets of the body 11 of the impeller unit 10 and reach the interlocked boiler.

Rotation of the impeller 13, through the magnetic elements 13D, is detected by the magnetic detector of the detecting unit 20; the signal produced by the unit 30 reaches the boiler control system, which is informed of a running request for hot water; therefore, the control system will instruct activation of the boiler heating element.

The boiler control system will elaborate the signal from the unit 20 and also determine the water flowrate from the valve 1, i.e. entering the boiler, so it can instruct the water heating element; as previously explained, information related to the water flowrate is used by the boiler control system to set the power supplied by the heating element, so that it may possibly equal the one actually required.

It is now assumed to have the boiler used in an environmental condition of low temperature.

In this case, should the temperature of inlet water to the device DC (i.e. to the boiler) licking the container 6A lay under a preset threshold, the wax 6C of the thermal actuator 6 would start reducing its own volume.

Since the piston 6F has a constrained fixed position given by the seat 5A, contraction of the wax 6C causes a progressive downwards displacement of the container 6A, also by virtue of the spring action 7.

Obviously, also the shuttering element OT is displaced downwards with a resulting restriction of the outlet LP: so that a smaller amount of water will flow through the body 2 and out of the lower opening 4. This operating situation of the valve 1 is illustrated in the Figures 10 - 11.

Thus, a smaller amount of liquid will be supplied to the boiler; as a result, the boiler heating power can surely reach the desired temperature of the outlet water in spite of the starting low temperature of the latter.

Obviously, should temperature of the inlet water to the boiler increase with respect to the temperature as per the condition of Figures 10 - 11 (e.g. within one same day) and approach the preset threshold, the wax 6C would tend to increase its volume again, causing the body 6A to go back and the shuttering element OT to open the outlet LP, against the elastic action of the spring 7, up to the original position of Figures 8 and 9, i.e. a larger or complete opening of the outlet LP.

It is also clear that a complete shutoff of the hot water tap by the user will be detected by the control system through the meter; as a result, the fluid flow to the boiler is stopped and the heater element of the latter deactivated.

From the above description the features of the thermostatic control system and control method of a fluid flow, object of the present invention, are clear.

In particular, through the integration of two different flow control methods (i.e. a thermostatic control type and a volumetric control type) in one single system or device it is possible to optimise operation of an apparatus supplied with a liquid, whose activity is affected by the inlet temperature of the liquid itself.

As seen above, in fact, in the instance of application to a boiler, integration of both systems has the following result:
- in the event of very cold inlet water to the boiler, the thermostatic valve 1 will restrict the flowrate to let the boiler operate according to its flowrate - power curve for a length where power is high enough to heat the water at the desired temperature. Thus, outlet water will be less, but at the desired temperature;
- in the event of inlet water at normal temperature, i.e. the thermostatic valve 1 does not operate, the flowmeter 10-20 will set the power supplied by the boiler to always equal it to the real flowing flowrate, thus reducing power waste.

It should be noticed how according to a possible embodiment of the invention, these functions may also be obtained through the cooperation of two separate units, i.e. one comprising the thermostatic valve 1 at the inlet or anyway upstream the boiler and the other comprising the flowmeter 10-20 at the outlet or downstream the boiler (the metered flowrate would always be the same). The same applies to a further possible embodiment, according to which the arrangement of the thermostatic valve 1 and flowmeter 10-20 inside the body CT may be inverted compared to the arrangement described above by way of example, leaving the position of the device DC unchanged either upstream the boiler or at the boiler inlet (according to this implementation, the flowmeter would be located upstream the thermostatic valve).

Other practical advantages of the invention relate to a minimum number of basic components of the device DC, of the valve 1 and of the impeller unit 10, as well as the fact that these latter can be assembled and then mounted in the body CT according to an easy, fast and low-cost procedure in view of a minor number of operations.

Due to the minimum number of components, the device DC can have a smaller size and an increased number of possible applications.

Another advantage also refers to its considerable manufacturing flexibility and shuttering function, which according to the invention is performed by the shuttering element OT associated to the thermal actuator 6.

In this frame, in fact, it is clear how a same shuttering element OT and relevant supporting element ES can be combined with various thermal actuators for the manufacture of thermostatic valves having different operating features; the same applies also in the opposite instance, in which to a same body 6A, can be associated to various shuttering elements OT with relevant supporting elements ES.

It is obvious that many other changes are possible for the man skilled in the art to the device and thermostatic control method described above by way of example and it is also clear that in practical actuation of the invention the various elements described above may have a different form and material and be replaced by technical equivalent elements.

According to a first possible embodiment, the shuttering element OT may be resting completely on the contraction RC during the rest condition of the thermal actuator 6; however, this rest condition should equal the minimum temperature and/or minimum fluid flowrate.

In this instance, the inner surface of the body 2 would be provided with calibrated side grooves in line with the contraction RC, having the function of the outlet LP, i.e. being apt to warrant the flow of a minimum fluid flowrate required and ensure detection of the tap opening; in alternative, said grooves could be delimited directly on the shuttering element OT.

It is also clear that the shuttering element OT may have a different form from the one represented and described by way of example, in particular be shaped to warrant consistent or preset flowrates.

According to a further possible embodiment, the seat 5A for the piston end 6F may be through-going and have an adjusting screw or dowel on the opposite side of the insertion of the piston end for determining the working point of the valve 1.

Actuation of this screw or dowel may change the resting point of the piston 6F, e.g. modifying the length of the piston portion inserted in the wax 6C, and therefore the ratio of volume of the wax and the volume of the chamber containing it: thus, the valve switch-in temperature can be preset and likely tolerances in filling the container 6A with wax compensated.

The shuttering element OT may be manufactured from any material suitable for the purpose, instead of metal.

The diffuser 12 may also integrate the filter 30; eventually, at least some components 1, 10 and 30 may further have mutual engaging elements to prevent the risk of these components being withdrawn from the body CT due to a fluid thrust.

According to the invention, the flowmeter employed may use an impeller actuated by a tangential flow instead of an impeller actuated by an axial flow.

## Claims

1. An apparatus, in particular a boiler, comprising a thermostatic control system (DC) of the fluid feeding said apparatus, the operation of said apparatus being affected by the inlet fluid temperature in the apparatus itself, the system comprising a thermostatic control device (1) having a body (2) with at least a first opening (3) and a second opening (4), a cavity extending between said openings, wherein components (6,7,8,ES,OT) are located, which comprise at least an actuation device (6) sensitive to the temperature of the fluid flowing in the cavity (C), said actuation device (6) comprising at least a thrusting element (6F); said thermostatic control device (1) further comprising shuttering means (OT), actuated by said actuation device (6) which operate on a fluid outlet (LP), **characterized in that** said thermostatic control device (1) is located at the inlet of said apparatus and that the system comprises furthermore fluid flow or flowrate metering means (10-20).

2. An apparatus according to claim 1, **characterized in that** said flow or flowrate metering means (10-20) are located between said thermostatic control device (1) and said apparatus.

3. An apparatus according to claim 1, **characterized in that** said thermostatic control device (1) is located between said flow or flowrate metering means (10-20) and said apparatus.

4. An apparatus according to claim 2, **characterized in that** said flow or flowrate metering means (10-20) are located directly downstream of said thermostatic control device (1).

5. An apparatus according to claim 1, **characterized in that** said flow or flowrate metering means (10-20) are located downstream of said apparatus.

6. An apparatus according to claim 2 or 4, **characterized in that** said thermostatic control system provides fluid flow regulating and/or stabilizing means (30) between said thermostatic control device (1) and said flow or flowrate metering means (10-20).

7. An apparatus according to claim 1, **characterized in that** said flow or flowrate metering means (10-20) comprise a unit (10) with an impeller (13) and a detection unit (20) of the rotation of said impeller (13).

8. An apparatus according to claim 7, **characterized in that** said thermostatic control device (1) and said impeller unit (10) are inserted in one same duct (CT).

9. An apparatus according to claim 8, **characterized in that** respective positioning seats (S1,S2) for said thermostatic control device (1) and said impeller unit (10) are delimited in said duct (CT).

10. An apparatus according to claim 6, **characterized in that** said fluid flow regulating and/or stabilizing means comprise an element (30) in contact with both said thermostatic control device (1) and said impeller unit (10).

11. An apparatus according to at least one claim 6 or 10, **characterized in that** said fluid flow regulating and/or stabilizing means comprise a filter element (30).

12. An apparatus according to claims 7 and 8, **characterized in that** said detection unit (20) is associated outside of said duct (CT) substantially in line with said impeller (13), a positioning seat or striker (S3) for said detection unit (20) being delimited in particular on the outer surface of said duct (CT).

13. An apparatus according to claim 1, **characterized in that** said thermostatic control device (1) operates to restrict the fluid flowrate to said apparatus when the fluid temperature is below a preset threshold.

14. An apparatus according to claim 1, **characterized in that** said flow or flowrate meters means (10-20) operate for adjusting operation of said apparatus depending on the outlet fluid flowrate from said thermostatic control device (1).

15. An apparatus according to claim 1, **characterized in that** said actuation device (6) comprises at least an outer housing (6A,6D), wherefrom a piston (6F) extends at least partially out of one end.

16. An apparatus according to claim 15, **characterized in that** said shuttering means comprise an element (OT) mechanically connected, either directly or indirectly, to a portion of said outer housing (6A,6D) opposite to the one wherefrom said piston is extending out (6F).

17. An apparatus according to claim 16, **characterized in that** said outer housing (6A,6D) comprises at least a container (6A), which delimits a chamber containing a material (6C) of variable volume as a function of temperature, and at least a closing element (6D) of said chamber.

18. An apparatus according to at least one of the previous claims, **characterized in that** said body (2) comprises a bridge element (5) extending crosswise to said cavity (C), in particular substantially in line with said second opening (4), a constraint point being delimited in said bridge element (5) for one end of said thrusting element or piston (6F).

19. An apparatus according to claim 1, **characterized in that** said components (6,7,8) comprise an elastic element (7), in particular a spiral spring.

20. An apparatus according to claim 19, **characterized in that** said components (6,7,8) comprise a striker element (8) for said elastic element (7).

21. An apparatus according to claim 19 or 20, **characterized in that** said striker element (8) has elastic fastening means (8A,8A').

22. An apparatus according to claim 21, **characterized in that** said striker element (8) delimits a contraction (RC), where said outlet (LP) is delimited in line with it.

23. An apparatus according to claims 19 and 22, **characterized in that** said shuttering element (OT) is through-going said contraction (RC) and in particular it has a substantially cone-truncated shape.

24. An apparatus according to at least one of the previous claims from 15 to 17, **characterized in that** said shuttering element (OT) is associated to said outer housing (6A,6D) through a supporting element (ES).

25. An apparatus according to the previous claim, **characterized in that** said supporting element (ES) delimits a resting area (ES 1) for said elastic element (7).

26. An apparatus according to claim 24 or 25, **characterized in that** said supporting element (ES) has a shaft (ES2), on which said shuttering element (OT) is inserted.

27. An apparatus according to at least one of the previous claims, **characterized in that** on the outer surface of said body (2) is delimited at least a housing (2A) for a sealing element, in particular an O-ring gasket (OR) type.

28. An apparatus according to at least one of the previous claims, **characterized in that** said thermostatic control system provides adjusting means of the working point of said thermostatic control device (1).

29. A flow control method of a fluid feeding an apparatus, in particular a boiler, according to one or more of the claims 1-27, the operation of said apparatus being affected by the inlet fluid temperature in the apparatus itself, said method providing metering of the fluid flowrate to regulate operation of the latter, **characterized in that** it further provides thermostatic regulation of the fluid flowrate, at the inlet of said apparatus.

30. A method according to claim 25, **characterized in that** said thermostatic regulation is provided to restrict the fluid flowrate to said apparatus, when the fluid temperature is below a preset threshold.

31. A method according to claim 25 or 30, **characterized in that** said flowrate metering is performed between the thermostatic setting point and said apparatus.

32. A method according to claim 29 or 30, **characterized in that** said thermostatic regulation is performed between the flowrate metering point and said apparatus.

33. A method according to claim 29, **characterized in that** said flowrate metering is performed downstream of said apparatus.

34. A method according to claim 31, **characterized in that** said flowrate metering is performed directly downstream of said thermostatic setting.

35. A method according to at least one of the previous claims, **characterized in that** it provides fluid flow regulation and/or stabilization between the flowrate thermostatic setting and flowrate metering point.

36. A method according to at least one of the previous claims, **characterized in that** the fluid flowrate is restricted should the fluid temperature be lower than said preset threshold, so as to make it compatible with the working power of said apparatus.

37. A method according to at least one of the previous claims, **characterized in that** said flowrate metering is used for setting the working power of said apparatus, so as to have it always equalling to the real inlet flowrate to said apparatus.

38. A thermostatic valve for controlling the flow of a fluid feeding an apparatus, in particular a boiler, of the type according to one or more of claims 1-27, said valve (DC) comprising a body (CT) with at least a first opening (3) and a second opening (4), a cavity extending between said openings, wherein components (1,10,30) are housed, which comprise at least a thermostatic control device (1) fitted with an actuation device (6) sensitive to the temperature of the fluid flowing in the cavity, said actuation device (6) comprising at least a thrusting element (6F), said thermostatic control device (1) further comprising shuttering means (OT), which operate on a fluid outlet (LP) and actuated by said actuation device (6), **characterized in that** said body (CT) has associated flow or flowrate metering means (10-20) of the fluid flowing in said cavity.

39. A thermostatic valve, according to the previous claim, **characterized** of providing fluid flow regulating and/or stabilizing means (30), in particular located upstream said flow or flowrate meters means (10-20) and between said thermostatic control device (1) and said flow or flowrate metering means (10-20).

40. A thermostatic valve, according to claim 38, **characterized in that** said flow or flowrate metering means (10-20) comprise a unit (10) with an impeller (13) and a detection unit (20) of the rotation of said impeller (13), in particular said impeller (13) being of an axial type with respect to the fluid flowing through said valve (DC).

41. A thermostatic valve, according to claim 40, **characterized in that** said thermostatic control device (1) and said impeller unit (10) are located in one same duct (CT).

42. A thermostatic valve, according to claim 40 or 41, **characterized in that** respective positioning seats (S1,S2) for said thermostatic control device (1) and said impeller unit (10) are delimited in said duct (CT).

43. A thermostatic valve, according to claim 39, **characterized in that** said fluid flow regulating and/or stabilizing means comprise an element (30) in contact with both said thermostatic control device (1) and said impeller unit (10), in particular comprising a filter element (30).

44. A thermostatic valve, according to the claims 40 and 41, **characterized in that** said detection unit (20) is associated outside of said duct (CT) substantially in line with said impeller (13), a positioning seat or striker (S3) for said detection unit (20) being delimited in particular on the outer surface of said duct (CT).

45. A thermostatic valve, according to one or more of claims from 38 to 44, **characterized in that** said actuation device (6) comprises at least an outer housing (6A,6D) wherefrom a piston (6F) extends at least partially out of one end, said shuttering means comprising an element (OT) mechanically connected, either directly or indirectly, to a portion of said outer housing (6A,6D) opposite to the one wherefrom said piston is extending out (6F).

46. A thermostatic valve, according to the previous claim, **characterized in that** said outer housing (6A,6D) comprises at least a container (6A), which delimits a chamber containing a material (6C) of variable volume as a function of temperature, and at least a closing element (6D) of said chamber.

47. A thermostatic valve, according to one or more of claims from 38 to 46, **characterized in that** said body (2) comprises a bridge element (5) extending crosswise to said cavity (C), in particular substantially in line with said second opening (4), a constraint point being delimited in said bridge element (5) for one end of said thrusting element or piston (6F).

48. A thermostatic valve, according to one or more of claims from 38 to 47, **characterized in that** said components (6,7,8) comprise an elastic element (7), in particular a spiral spring, and a striker element (8) for said elastic element (7), in particular said striker element (8) having elastic fastening means (8A,8A').

49. A thermostatic valve, according to the previous claim, **characterized in that** said striker element (8) delimits a contraction (RC), where said outlet (LP) is delimited in line with it, said shuttering element (OT) being through-going said contraction (RC) and in particular having a substantially cone-truncated shape.

50. A thermostatic valve, according to claim 45 or 46, **characterized in that** said shuttering element (OT) is associated to said outer housing (6A,6D) through a supporting element (ES) delimiting a resting area (ES1) for said elastic element (7), said supporting element (ES) having in particular a shaft (ES2) on which said shuttering element (OT) is inserted.

51. A thermostatic valve, according to one or more of claims from 38 to 50, **characterized in that** at least a housing (2A) for a sealing element, in particular an O-ring gasket (OR) type, is delimited on the outer surface of said body (2).

52. A thermostatic valve, according to one or more of claims from 38 to 51, **characterized** of providing adjusting means of the working point of said valve (DC).

53. A thermostatic valve, according to claims 39 and 41, **characterized in that** said fluid flow regulating and/or stabilizing means (30) are further located in said one same duct (CT).

54. A thermostatic valve, according to claim 41, **characterized in that** said thermostatic control device (1) is located next to said first opening (3) provided in said one same duct (CT), in particular an upper opening, and said impeller unit (10) is located next to said second opening (4) provided in said one same duct (CT), in particular a bottom opening.

55. A thermostatic valve, according to one or more of claims from 38 to 54, **characterized** of providing suitable connecting means (MA) fitted on both ends of said body (CT).

56. A thermostatic valve, according to claim 40, **characterized in that** said unit (10) further comprises a diffuser (12), in particular located upstream said impeller (13).

57. Use of the control method according to one or more of the claims from 29 to 37 and/or of the thermostatic valve according to one or more of the claims from 38 to 56, in boilers for water heating, in particular in a domestic environment.

## Patentansprüche

1. Vorrichtung, insbesondere ein Boiler, die eine thermostatische Regelung (DC) der Flüssigkeit aufweist, welche die Vorrichtung speist, wobei der Betrieb der Vorrichtung durch die Einlass-Flüssigkeitstemperatur in der Vorrichtung selbst beeinflusst wird, wobei das System einen thermostatischen Regler (1) umfasst, der einen Körper (2) mit zumindest einer ersten Öffnung (3) und einer zweiten Öffnung (4) aufweist, wobei sich ein Hohlraum zwischen den Öffnungen erstreckt, in welchem Komponenten (6, 7, 8, ES, OT) angeordnet sind, die zumindest eine Betätigungsvorrichtung (6) umfassen, welche empfindlich für die Temperatur der Flüssigkeit ist, die in dem Hohlraum (C) fließt, wobei die Betätigungsvorrichtung (6) zumindest ein Schubelement (6 F) umfasst, der thermostatische Regler (1) ferner ein Verschlussmittel (OT) umfasst, betätigt durch die Betätigungsvorrichtung (6), welche auf einen Flüssigkeitsauslass (LP) wirkt, **dadurch gekennzeichnet, dass** der thermostatische Regler (1) an dem Einlass der Vorrichtung angeordnet ist und dass das System außerdem Flüssigkeitsstrom- oder Durchfluss-Messvorrichtungen (10 - 20) umfasst.

2. Vorrichtung nach Anspruch 1, **dadurch gekennzeichnet, dass** die Strom- oder Durchfluss-Messvorrichtungen (10 - 20) zwischen dem thermostatischen Regler (1) und der Vorrichtung angeordnet sind.

3. Vorrichtung nach Anspruch 1, **dadurch gekennzeichnet, dass** der thermostatische Regler (1) zwischen den Strom- oder Durchfluss-Messvorrichtungen (10 - 20) und der Vorrichtung angeordnet ist.

4. Vorrichtung nach Anspruch 2, **dadurch gekennzeichnet, dass** die Strom- oder Durchfluss-Messvorrichtungen (10 - 20) direkt hinter dem thermostatischen Regler (1) angeordnet sind.

5. Vorrichtung nach Anspruch 1, **dadurch gekennzeichnet, dass** die Strom- oder Durchfluss- Messvorrichtungen (10 - 20) hinter der Vorrichtung angeordnet sind.

6. Vorrichtung nach Anspruch 2 oder 4, **dadurch gekennzeichnet, dass** die thermostatische Regelung Flüssigkeitsstrom-Regulierungsmittel und / oder Stabilisierungsmittel (30) zwischen dem thermostatischen Regler (1) und den Strom- oder Durchfluss- Messvorrichtungen (10 - 20) vorsieht.

7. Vorrichtung nach Anspruch 1, **dadurch gekennzeichnet, dass** die Strom- oder Durchfluss- Messvorrichtungen (10 - 20) eine Einheit (10) mit einem Flügelrad (13) und eine Erfassungseinheit (20) für die Rotation des Flügelrades (13) umfasst.

8. Vorrichtung nach Anspruch 7, **dadurch gekennzeichnet, dass** der thermostatische Regler (1) und die Flügelrad-Einheit (10) in demselben Rohr (CT) eingeführt sind.

9. Vorrichtung nach Anspruch 8, **dadurch gekennzeichnet, dass** jeweilige Positionierungssitze (S 1, S 2) für den thermostatischen Regler (1) und die Flügelrad-Einheit (10) in dem Rohr (CT) begrenzt sind.

10. Vorrichtung nach Anspruch 6, **dadurch gekennzeichnet, dass** die Flüssigkeitsstrom-Regulierungsmittel und / oder -Stabilisierungsmittel ein Element (30) umfassen, das mit sowohl dem thermostatischen Regler (1) als auch mit der Flügelrad-Einheit (10) in Kontakt steht.

11. Vorrichtung nach zumindest einem der Ansprüche 6 oder 10, **dadurch gekennzeichnet, dass** die Flüssigkeitsstrom-Regulierungsmittel und / oder -Stabilisierungsmittel ein Filterelement (30) umfassen.

12. Vorrichtung nach Anspruch 7 und 8, **dadurch gekennzeichnet, dass** die Erfassungseinheit (20) außerhalb des Rohres (CT) im wesentlichen in einer Linie mit dem Flügelrad (13) verbunden ist, wobei ein Positionierungssitz oder Anschlag (S 3) für die Erfassungseinheit (20) insbesondere auf der äußeren Oberfläche des Rohres (CT) abgegrenzt ist.

13. Vorrichtung nach Anspruch 1, **dadurch gekennzeichnet, dass** der thermostatische Regler (1) operiert, um den Flüssigkeits-Durchfluss zu der Vorrichtung zu beschränken, wenn die Flüssigkeits-Temperatur unterhalb eines voreingestellten Schwellenwertes liegt.

14. Vorrichtung nach Anspruch 1, **dadurch gekennzeichnet, dass** die Strom- oder Durchfluss-Messvorrichtungen (10 - 20) operieren, um den Betrieb der Vorrichtung in Abhängigkeit von dem Auslass-Flüssigkeitsdurchfluss von dem thermostatischen Regler (1) einzurichten.

15. Vorrichtung nach Anspruch 1, **dadurch gekennzeichnet, dass** die Betätigungsvorrichtung (6) zumindest ein äußeres Gehäuse (6 A, 6 D) umfasst, von dem sich zumindest teilweise aus einem Ende ein Kolben (6 F) erstreckt.

16. Vorrichtung nach Anspruch 15, **dadurch gekennzeichnet, dass** das Verschlussmittel ein Element (OT) umfasst, welches entweder direkt oder indirekt mechanisch mit einem Abschnitt des äußeren Gehäuses (6 A, 6 D) verbunden ist, gegenüber von dem einen, von dem sich der Kolben (6 F) heraus erstreckt.

17. Vorrichtung nach Anspruch 16, **dadurch gekennzeichnet, dass** das äußere Gehäuse (6 A, 6 D) zumindest einen Behälter (6 A) umfasst, welcher eine Kammer abgrenzt, die ein Material (6 C) enthält, welches infolge von Temperatur ein variables Volumen aufweist, sowie zumindest ein verschließendes Element (6 D) der Kammer.

18. Vorrichtung nach zumindest einem der vorhergehenden Ansprüche, **dadurch gekennzeichnet, dass** der Körper (2) ein Brückenelement (5) umfasst, das sich quer über den Hohlraum (C) erstreckt, insbesondere im Wesentlichen in einer Linie mit der zweiten Öffnung (4), wobei ein Beschränkungspunkt in dem Brückenelement (5) für ein Ende des Schubelements oder Kolbens (6 F) abgegrenzt ist.

19. Vorrichtung nach Anspruch 1, **dadurch gekennzeichnet, dass** die Komponenten (6, 7, 8) ein elastisches Element (7) umfassen, insbesondere eine Spiralfeder.

20. Vorrichtung nach Anspruch 19, **dadurch gekennzeichnet, dass** die Komponenten (6, 7, 8) ein Anschlagelement (8) für das elastische Element (7) umfassen.

21. Vorrichtung nach Anspruch 19 oder 20, **dadurch gekennzeichnet, dass** das Anschlagelement (8) elastische Befestigungsmittel (8 A, 8 A') aufweist.

22. Vorrichtung nach Anspruch 21, **dadurch gekennzeichnet, dass** das Anschlagelement (8) eine Verengung (RC) abgrenzt, wo der Auslass (LP) in einer Linie mit ihr abgegrenzt ist.

23. Vorrichtung nach Anspruch 19 und 22, **dadurch gekennzeichnet, dass** das Verschlusselement (OT) durch die Verengung (RC) hindurchtritt und insbesondere eine im Wesentlichen kegelstumpfförmige Form aufweist.

24. Vorrichtung nach zumindest einem der vorhergehenden Ansprüche von 15 bis 17, **dadurch gekennzeichnet, dass** das Verschlusselement (OT) mit dem äußeren Gehäuse (6 A, 6 D) durch ein stützendes Element (ES) verbunden ist.

25. Vorrichtung nach dem vorhergehenden Anspruch, **dadurch gekennzeichnet, dass** das stützende Element (ES) einen Auflagebereich (ES 1) für das elastische Element (7) abgrenzt.

26. Vorrichtung nach Anspruch 24 oder 25, **dadurch gekennzeichnet, dass** das stützende Element (ES) einen Schaft (ES 2) aufweist, auf dem das Verschlusselement (OT) eingesetzt ist.

27. Vorrichtung nach zumindest einem der vorhergehenden Ansprüche, **dadurch gekennzeichnet, dass** auf der äußeren Oberfläche des Körpers (2) zumindest ein Gehäuse (2 A) für ein Dichtungselement, insbesondere eine Art von O-Ring-Dichtung (OR), abgegrenzt ist.

28. Vorrichtung nach zumindest einem der vorhergehenden Ansprüche, **dadurch gekennzeichnet, dass** die thermostatische Regelung Einstellmittel des Betriebspunktes des thermostatischen Reglers (1) vorsieht.

29. Verfahren zur Strömungsregulierung einer Flüssigkeit, die eine Vorrichtung speist, insbesondere einen Boiler, nach einem oder mehreren der Ansprüche 1 bis 27, wobei der Betrieb der Vorrichtung durch die Einlass-Flüssigkeitstemperatur in der Vorrichtung selbst beeinflusst wird, wobei das Verfahren das Messen des Flüssigkeits-Durchflusses vorsieht, um die Operation des Letzteren zu regeln, **dadurch gekennzeichnet, dass** es ferner eine thermostatische Regelung des Flüssigkeits-Durchflusses an dem Einlass der Vorrichtung vorsieht.

30. Verfahren nach Anspruch 29, **dadurch gekennzeichnet, dass** die thermostatische Regelung vorgesehen ist, um den Flüssigkeits-Durchfluss zu der Vorrichtung zu beschränken, wenn die Flüssigkeitstemperatur unter einem voreingestellten Schwellenwert liegt.

31. Verfahren nach Anspruch 29 oder 30, **dadurch gekennzeichnet, dass** die Durchfluss-Messung zwischen dem thermostatischen Regulierungspunkt und der Vorrichtung ausgeführt wird.

32. Verfahren nach Anspruch 29 oder 30, **dadurch gekennzeichnet, dass** die thermostatische Regelung zwischen dem Durchfluss- Messpunkt und der Vorrichtung ausgeführt wird.

33. Verfahren nach Anspruch 29, **dadurch gekennzeichnet, dass** die Durchfluss-Messung hinter der Vorrichtung ausgeführt wird.

34. Verfahren nach Anspruch 31, **dadurch gekennzeichnet, dass** die Durchfluss-Messung direkt hinter der thermostatischen Einstellung ausgeführt wird.

35. Verfahren nach zumindest einem der vorhergehenden Ansprüche, **dadurch gekennzeichnet, dass** es eine Flüssigkeits-Strömungsregulierung und / oder -Stabilisierung zwischen der thermostatischen Einstellung des Durchflusses und dem Messpunkt des Durchflusses vorsieht.

36. Verfahren nach zumindest einem der vorhergehenden Ansprüche, **dadurch gekennzeichnet, dass** der Flüssigkeits-Durchfluss begrenzt wird, sollte die Flüssigkeitstemperatur niedriger als der voreingestellte Schwellenwert sein, um ihn mit der Arbeitskraft der Vorrichtung zu vereinbaren.

37. Verfahren nach zumindest einem der vorhergehenden Ansprüche, **dadurch gekennzeichnet, dass** die Durchfluss-Messung für das Einstellen der Arbeitskraft der Vorrichtung verwendet wird, um sie immer an den tatsächlichen Einlass-Durchfluss zu der Vorrichtung anzugleichen.

38. Thermostatisches Ventil zur Regulierung der Strömung einer Flüssigkeit, die eine Vorrichtung speist, insbesondere einen Boiler, des Typs nach einem oder mehreren der Ansprüche 1 bis 27, wobei das Ventil (DC) einen Körper (CT) mit zumindest einer ersten Öffnung (3) und einer zweiten Öffnung (4) umfasst, wobei sich ein Hohlraum zwischen den Öffnungen erstreckt, in welcher Komponenten (1, 10, 30) untergebracht sind, welche zumindest einen thermostatischen Regler (1) umfassen, der mit einer Betätigungsvorrichtung (6) eingerichtet ist, wobei Letztere für die Temperatur der Flüssigkeit empfindlich ist, die in den Hohlraum fließt, wobei die Betätigungsvorrichtung (6) zumindest ein Schubelement (6 F) umfasst, der thermostatische Regler (1) ferner ein Verschlussmittel (OT) umfasst, welches auf einen Flüssigkeitsauslass (LP) wirkt und durch die Betätigungsvorrichtung (6) betätigt wird, **dadurch gekennzeichnet, dass** der Körper (CT) Strom- oder Durchfluss-Messvorrichtungen (10 - 20) für die Flüssigkeit aufweist, die in den Hohlraum fließt.

39. Thermostatisches Ventil nach dem vorhergehenden Anspruch, **gekennzeichnet durch** das Bereitstellen von Flüssigkeitsstrom-Regulierungsmitteln und / oder - Stabilisierungsmitteln (30), welche insbesondere vor den Strom- oder Durchfluss-Messvorrichtungen (10 - 20) und zwischen dem thermostatischen Regler (1) und den Strom- oder Durchfluss- Messvorrichtungen (10 - 20) angeordnet sind.

40. Thermostatisches Ventil nach Anspruch 38, **dadurch gekennzeichnet, dass** die Strom- oder Durchfluss- Messvorrichtungen (10 - 20) eine Einheit (10) mit einem Flügelrad (13) und einer Erfassungseinheit (20) für die Rotation des Flügelrades (13) umfasst, wobei insbesondere das Flügelrad (13) ein axialer Typ in Bezug zu der Flüssigkeit ist, welche durch das Ventil (DC) fließt.

41. Thermostatisches Ventil nach Anspruch 40, **dadurch gekennzeichnet, dass** der thermostatische Regler (1) und die Flügelrad-Einheit (10) in demselben Rohr (CT) angeordnet sind.

42. Thermostatisches Ventil nach Anspruch 40 oder 41, **dadurch gekennzeichnet, dass** jeweilige Positionierungssitze (S 1, S 2) für den thermostatischen Regler (1) und die Flügelrad-Einheit (10) in dem Rohr (CT) abgegrenzt sind.

43. Thermostatisches Ventil nach Anspruch 39, **dadurch gekennzeichnet, dass** die Flüssigkeitsstrom-Regulierungsmittel und / oder -Stabilisierungsmittel ein Element (30) umfassen, das mit sowohl dem thermostatischen Regler (1) als auch mit der Flügelrad-Einheit (10) in Kontakt steht und insbesondere ein Filterelement (30) umfasst.

44. Thermostatisches Ventil nach den Ansprüchen 40 und 41, **dadurch gekennzeichnet, dass** die Erfassungseinheit (20) außerhalb des Rohres (CT) im wesentlichen in einer Linie mit dem Flügelrad (13) verbunden ist, wobei ein Positionierungssitz oder Anschlag (S 3) für die Erfassungseinheit (20) insbesondere auf der äußeren Oberfläche des Rohres (CT) abgegrenzt ist.

45. Thermostatisches Ventil nach einem oder mehreren der Ansprüche von 38 bis 44, **dadurch gekennzeichnet, dass** die Betätigungsvorrichtung (6) zumindest ein äußeres Gehäuse (6 A, 6 D) umfasst, von dem sich zumindest teilweise aus einem Ende ein Kolben (6 F) erstreckt, und dass das Verschlussmittel ein Element (OT) umfasst, welches entweder direkt oder indirekt mechanisch mit einem Abschnitt des äußeren Gehäuses (6 A, 6 D) verbunden ist, gegenüber von dem einen, von dem sich der Kolben (6 F) heraus erstreckt.

46. Thermostatisches Ventil nach dem vorhergehenden Anspruch, **dadurch gekennzeichnet, dass** das äußere Gehäuse (6 A, 6 D) zumindest einen Behälter (6 A) umfasst, welcher eine Kammer abgrenzt, die ein Material (6 C) enthält, welches infolge von Temperatur ein variables Volumen aufweist, sowie zumindest ein verschließendes Element (6 D) der Kammer.

47. Thermostatisches Ventil nach einem oder mehreren der Ansprüche von 38 bis 46, **dadurch gekennzeichnet, dass** der Körper (2) ein Brückenelement (5) umfasst, das sich quer über den Hohlraum (C) erstreckt, insbesondere im Wesentlichen in einer Linie mit der zweiten Öffnung (4), wobei ein Beschränkungspunkt in dem Brückenelement (5) für ein Ende des Schubelements oder Kolbens (6 F) abgegrenzt ist.

48. Thermostatisches Ventil nach einem oder mehreren der Ansprüche von 38 bis 47, **dadurch gekennzeichnet, dass** die Komponenten (6, 7, 8) ein elastisches Element (7) umfassen, insbesondere eine Spiralfeder, und ein Anschlagelement (8) für das elastische Element (7), wobei insbesondere das Anschlagelement (8) elastische Befestigungsmittel (8 A, 8 A') aufweist.

49. Thermostatisches Ventil nach dem vorhergehenden Anspruch, **dadurch gekennzeichnet, dass** das Anschlagelement (8) eine Verengung (RC) abgrenzt, wo der Auslass (LP) in einer Linie mit ihr abgegrenzt ist, wobei das Verschlusselement (OT) durch die Verengung (RC) hindurchtritt und insbesondere eine im Wesentlichen kegelstumpfförmige Form aufweist.

50. Thermostatisches Ventil nach Anspruch 45 oder 46, **dadurch gekennzeichnet, dass** das Verschlusselement (OT) mit dem äußeren Gehäuse (6 A, 6 D) durch ein stützendes Element (ES) verbunden ist, welches einen Auflagebereich (ES 1) für das elastische Element (7) begrenzt, und das stützende Element (ES) insbesondere einen Schaft (ES 2) aufweist, auf dem das Verschlusselement (OT) eingesetzt ist.

51. Thermostatisches Ventil nach einem oder mehreren der Ansprüche von 38 bis 50, **dadurch gekennzeichnet, dass** zumindest ein Gehäuse (2 A) für ein Dichtungselement, insbesondere eine Art von O-Ring-Dichtung (OR), auf der äußeren Oberfläche des Körpers (2) abgegrenzt ist.

52. Thermostatisches Ventil nach einem oder mehreren der Ansprüche von 38 bis 51, **gekennzeichnet durch** das Bereitstellen von einem Einstellmittel des Betriebspunktes des Ventils (DC).

53. Thermostatisches Ventil nach den Ansprüchen 39 und 41, **dadurch gekennzeichnet, dass** die Flüssigkeitsstrom-Regulierungsmittel und / oder -Stabilisierungsmittel (30) ferner in demselben Rohr (CT) angeordnet sind.

54. Thermostatisches Ventil nach Anspruch 41, **dadurch gekennzeichnet, dass** der thermostatische Regler (1) in der Nähe der ersten Öffnung (3) angeordnet ist, welche in demselben Rohr (CT) eingerichtet ist, insbesondere einer oberen Öffnung, und die Flügelrad-Einheit (10) in der Nähe der zweiten Öffnung (4) angeordnet ist, welche in demselben Rohr (CT) eingerichtet ist, insbesondere einer unteren Öffnung.

55. Thermostatisches Ventil nach einem oder mehreren der Ansprüche von 38 bis 54, **gekennzeichnet durch** das Bereitstellen von passenden Verbindungsmitteln (MA), die auf beiden Enden des Körpers (CT) eingerichtet sind.

56. Thermostatisches Ventil nach Anspruch 40, **dadurch gekennzeichnet, dass** die Einheit (10) ferner einen Diffusor (12) umfasst, welcher insbesondere vor dem Flügelrad (13) angeordnet ist.

57. Die Verwendung des Reglungsverfahrens nach einem oder mehreren der Ansprüche von 29 bis 37 und / oder dem thermostatischen Ventil nach einem oder mehreren der Ansprüche von 38 bis 56, in Boilern für das Erhitzen von Wasser, insbesondere in einer Haushaltsumgebung.

## Revendications

1. Appareil, en particulier chaudière, comprenant un système de commande thermostatique (DC) du fluide alimentant ledit appareil, le fonctionnement dudit appareil étant affecté par la température du fluide d'entrée dans l'appareil lui-même, le système comprenant un dispositif de commande thermostatique (1) comportant un corps (2) avec au moins une première ouverture (3) et une seconde ouverture (4), une cavité s'étendant entre lesdites ouvertures, où des composants (6, 7, 8, ES, OT) sont placés, lesquels comprennent au moins un dispositif d'actionnement (6) sensible à la température du fluide qui s'écoule dans la cavité (C), ledit dispositif d'actionnement (6) comprenant au moins un élément de poussée (6F), ledit dispositif de commande thermostatique (1) comprenant en outre des moyens d'obturation (OT), actionnés par ledit dispositif d'actionnement (6) qui fonctionne sur une sortie de fluide (LP), **caractérisé en ce que** ledit dispositif de commande thermostatique (1) est placé au niveau de l'entrée dudit appareil et **en ce que** le système comprend en outre des moyens de mesure d'écoulement ou de débit (10 à 20) du fluide.

2. Appareil selon la revendication 1, **caractérisé en ce que** lesdits moyens de mesure d'écoulement ou de débit (10 à 20) sont placés entre ledit dispositif de commande thermostatique (1) et ledit appareil.

3. Appareil selon la revendication 1, **caractérisé en ce que** ledit dispositif de commande thermostatique (1) est placé entre lesdits moyens de mesure d'écoulement ou de débit (10 à 20) et ledit appareil.

4. Appareil selon la revendication 2, **caractérisé en ce que** lesdits moyens de mesure d'écoulement ou de débit (10 à 20) sont placés directement en aval dudit dispositif de commande thermostatique (1).

5. Appareil selon la revendication 1, **caractérisé en ce que** lesdits moyens de mesure d'écoulement ou de débit (10 à 20) sont placés en aval dudit appareil.

6. Appareil selon la revendication 2 ou 4, **caractérisé en ce que** ledit système de commande thermostatique fournit des moyens de régulation et/ou de stabilisation d'écoulement de fluide (30) entre ledit dispositif de commande thermostatique (1) et lesdits moyens de mesure d'écoulement ou de débit (10 à 20).

7. Appareil selon la revendication 1, **caractérisé en ce que** lesdits moyens de mesure d'écoulement ou de débit (10 à 20) comprennent une unité (10) avec une hélice (13) et une unité de détection (20) de la rotation de ladite hélice (13).

8. Appareil selon la revendication 7, **caractérisé en ce que** ledit dispositif de commande thermostatique (1) et ladite unité d'hélice (10) sont insérés dans un seul et même conduit (CT).

9. Appareil selon la revendication 8, **caractérisé en ce que** des sièges de positionnement (S1, S2) respectifs pour ledit dispositif de commande thermostatique (1) et ladite unité d'hélice (10) sont délimités dans ledit conduit (CT).

10. Appareil selon la revendication 6, **caractérisé en ce que** lesdits moyens de régulation et/ou de stabilisation d'écoulement de fluide comprennent un élément (30) en contact avec à la fois ledit dispositif de commande thermostatique (1) et ladite unité d'hélice (10).

11. Appareil selon au moins l'une des revendications 6 ou 10, **caractérisé en ce que** lesdits moyens de régulation et/ou de stabilisation d'écoulement de fluide comprennent un élément de filtrage (30).

12. Appareil selon les revendications 7 et 8, **caractérisé en ce que** ladite unité de détection (20) est associée à l'extérieur dudit conduit (CT) sensiblement en alignement avec ladite hélice (13), un siège de positionnement ou un percuteur (S3) pour ladite unité de détection (20) étant délimité en particulier sur la surface extérieure dudit conduit (CT).

13. Appareil selon la revendication 1, **caractérisé en ce que** ledit dispositif de commande thermostatique (1) fonctionne de manière à limiter le débit de fluide vers ledit appareil lorsque la température du fluide est inférieure à un seuil prédéterminé.

14. Appareil selon la revendication 1, **caractérisé en ce que** lesdits moyens de mesure d'écoulement ou de débit (10 à 20) fonctionnent de manière à ajuster le fonctionnement dudit appareil en fonction du débit de fluide de sortie à partir dudit dispositif de commande thermostatique (1).

15. Appareil selon la revendication 1, **caractérisé en ce que** ledit dispositif d'actionnement (6) comprend au moins un logement extérieur (6A, 6D), à partir duquel s'étend un piston (6F) au moins partiellement hors d'une extrémité.

16. Appareil selon la revendication 15, **caractérisé en ce que** lesdits moyens d'obturation comprennent un élément (OT) relié par voie mécanique, soit directement, soit indirectement, à une partie dudit logement extérieur (6A, 6D) à l'opposé de celle à partir de laquelle sort ledit piston (6F).

17. Appareil selon la revendication 16, **caractérisé en ce que** ledit logement extérieur (6A, 6D) comprend au moins un récipient (6A), qui délimite une chambre contenant un matériau (6C) de volume variable en fonction de la température, et au moins un élément de fermeture (6D) de ladite chambre.

18. Appareil selon au moins l'une des revendications précédentes, **caractérisé en ce que** ledit corps (2) comprend un élément formant pont (5) s'étendant de manière transversale par rapport à ladite cavité (C), en particulier sensiblement en alignement avec ladite seconde ouverture (4), un point de contrainte étant délimité dans ledit élément formant pont (5) pour une extrémité dudit élément de poussée ou piston (6F).

19. Appareil selon la revendication 1, **caractérisé en ce que** lesdits composants (6, 7, 8) comprennent un élément élastique (7), en particulier un ressort spiral.

20. Appareil selon la revendication 19, **caractérisé en ce que** lesdits composants (6, 7, 8) comprennent un élément percuteur (8) pour ledit élément élastique (7).

21. Appareil selon la revendication 19 ou 20, **caractérisé en ce que** ledit élément percuteur (8) comporte des éléments de fixation élastiques (8A, 8A').

22. Appareil selon la revendication 21, **caractérisé en ce que** ledit élément percuteur (8) délimite un rétrécissement (RC), dans lequel ladite sortie (LP) est délimitée en alignement avec celui-ci.

23. Appareil selon les revendications 19 et 22, **caractérisé en ce que** ledit élément d'obturation (OT) traverse ledit rétrécissement (RC) et, en particulier, présente une forme sensiblement tronconique.

24. Appareil selon au moins l'une des revendications précédentes 15 à 17, **caractérisé en ce que** ledit élément d'obturation (OT) est associé audit logement extérieur (6A, 6D) à travers un élément de support (ES).

25. Appareil selon l'une des revendications précédentes, **caractérisé en ce que** ledit élément de support (ES) délimite une zone de repos (ES1) pour ledit élément élastique (7).

26. Appareil selon la revendication 24 ou 25, **caractérisé en ce que** ledit élément de support (ES) comporte un arbre (ES2), sur lequel est inséré ledit élément d'obturation (OT).

27. Appareil selon au moins l'une des revendications précédentes, **caractérisé en ce que**, sur la surface extérieure dudit corps (2), est délimité au moins un logement (2A) pour un élément d'étanchéité, en particulier du type joint torique (OR).

28. Appareil selon au moins l'une des revendications précédentes, **caractérisé en ce que** ledit système de commande thermostatique fournit des moyens d'ajustement du point de fonctionnement dudit dispositif de commande thermostatique (1).

29. Procédé de commande de l'écoulement d'une alimentation en fluide d'un appareil, en particulier d'une chaudière, selon une ou plusieurs des revendications 1 à 27, le fonctionnement dudit appareil étant affecté par la température du fluide d'entrée dans l'appareil lui-même, ledit procédé fournissant la mesure du débit de fluide afin de réguler le fonctionnement de ce dernier, **caractérisé en ce qu'**il fournit en outre la régulation thermostatique du débit du fluide, au niveau de l'entrée dudit appareil.

30. Procédé selon la revendication 29, **caractérisé en ce que** ladite régulation thermostatique est fournie de manière à limiter le débit du fluide vers ledit appareil, lorsque la température du fluide est inférieure à un seuil prédéterminé.

31. Procédé selon la revendication 29 ou 30, **caractérisé en ce que** ladite mesure du débit est réalisée entre le point de réglage thermostatique et ledit appareil.

32. Procédé selon la revendication 29 ou 30, **caractérisé en ce que** ladite régulation thermostatique est réalisée entre le point de mesure du débit et ledit appareil.

33. Procédé selon la revendication 29, **caractérisé en ce que** ladite mesure du débit est réalisée en aval dudit appareil.

34. Procédé selon la revendication 31, **caractérisé en ce que** ladite mesure du débit est réalisée directement en aval dudit réglage thermostatique.

35. Procédé selon au moins l'une des revendications précédentes, **caractérisé en ce qu'**il fournit une régulation et/ou une stabilisation d'écoulement de fluide entre le point de réglage thermostatique du débit et le point de mesure du débit.

36. Procédé selon au moins l'une des revendications précédentes, **caractérisé en ce que** le débit du fluide est limité si la température du fluide est inférieure audit seuil prédéterminé de manière à le rendre compatible avec la puissance utile dudit appareil.

37. Procédé selon au moins l'une des revendications précédentes, **caractérisé en ce que** ladite mesure du débit du fluide est utilisée pour régler la puissance utile dudit appareil de manière à ce qu'il soit toujours égal au débit d'entrée réel vers ledit appareil.

38. Vanne thermostatique destinée à commander le débit d'une alimentation en fluide d'un appareil, en particulier d'une chaudière, du type selon une ou plusieurs des revendications 1 à 27, ladite vanne (DC) comprenant un corps (CT) avec au moins une première ouverture (3) et une seconde ouverture (4), une cavité s'étendant entre lesdites ouvertures, dans lequel des composants (1, 10, 30) sont logés, lesquels comprennent au moins un dispositif de commande thermostatique (1) ajusté avec un dispositif d'actionnement (6) sensible à la température du fluide qui s'écoule dans la cavité, ledit dispositif d'actionnement (6) comprenant au moins un élément de poussée (6F), ledit dispositif de commande thermostatique (1) comprenant en outre des moyens d'obturation (OT), qui fonctionnent sur une sortie de fluide (LP) et actionnés par ledit dispositif d'actionnement (6), **caractérisé en ce que** ledit corps (CT) comporte des moyens de mesure d'écoulement ou de débit (10 à 20) associés au fluide s'écoulant dans ladite cavité.

39. Vanne thermostatique selon la revendication précédente, **caractérisée en ce qu'**il fournit des moyens de régulation et/ou de stabilisation d'écoulement de fluide (30), en particulier placés en amont desdits moyens de mesure d'écoulement ou de débit (10 à 20) et entre ledit dispositif de commande thermostatique (1) et lesdits moyens de mesure d'écoulement ou de débit (10 à 20).

40. Vanne thermostatique selon la revendication 38, **caractérisée en ce que** lesdits moyens de mesure d'écoulement ou de débit (10 à 20) comprennent une unité (10) avec une hélice (13) et une unité de détection (20) de la rotation de ladite hélice (13), en particulier ladite hélice (13) étant du type axial par rapport au fluide qui s'écoule à travers ledit thermostat (DC).

41. Vanne thermostatique selon la revendication 40, **caractérisée en ce que** ledit dispositif de commande thermostatique (1) et ladite unité d'hélice (10) sont placés dans un seul et même conduit (CT).

42. Vanne thermostatique selon la revendication 40 ou 41, **caractérisée en ce que** des sièges de positionnement (S1, S2) respectifs pour ledit dispositif de commande thermostatique (1) et ladite unité d'hélice (10) sont délimités dans ledit conduit (CT).

43. Vanne thermostatique selon la revendication 39, **caractérisée en ce que** lesdits moyens de régulation et/ou de stabilisation d'écoulement de fluide comprennent un élément (30) en contact avec ledit dispositif de commande thermostatique (1) et ladite unité d'hélice (10), comprenant en particulier un élément de filtrage (30).

44. Vanne thermostatique selon les revendications 40 et 41, **caractérisée en ce que** ladite unité de détection (20) est associée à l'extérieur dudit conduit (CT) sensiblement en alignement avec ladite hélice (13), un siège de positionnement ou un percuteur (S3) pour ladite unité de détection (20) délimitée en particulier sur la surface extérieure dudit conduit (CT).

45. Vanne thermostatique selon une ou plusieurs des revendications 38 à 44, **caractérisée en ce que** ledit dispositif d'actionnement (6) comprend au moins un logement extérieur (6A, 6D), à partir duquel s'étend un piston (6F) au moins partiellement hors d'une extrémité, lesdits moyens d'obturation comprenant un élément (OT) relié par voie mécanique, soit directement, soit indirectement, à une partie dudit logement extérieur (6A, 6D) à l'opposé de celle à partir de laquelle sort ledit piston (6F).

46. Vanne thermostatique selon la revendication précédente, **caractérisée en ce que** ledit logement extérieur (6A, 6D) comprend au moins un récipient (6A), qui délimite une chambre contenant un matériau (6C) de volume variable qui est fonction de la température, et au moins un élément de fermeture (6D) de ladite chambre.

47. Vanne thermostatique selon une ou plusieurs des revendications 38 à 46, **caractérisée en ce que** ledit corps (2) comprend un élément formant pont (5) s'étendant de manière transversale par rapport à ladite cavité (C), en particulier sensiblement en alignement avec ladite seconde ouverture (4), un point de contrainte étant délimité dans ledit élément formant pont (5) pour une extrémité dudit élément de poussée ou piston (6F).

48. Vanne thermostatique selon une ou plusieurs des revendications 38 à 47, **caractérisée en ce que** lesdits composants (6, 7, 8) comprennent un élément élastique (7), en particulier un ressort spiral, et un élément percuteur (8) pour ledit élément élastique (7), en particulier ledit élément percuteur (8) comportant des moyens de fixation élastiques (8A, 8A').

49. Vanne thermostatique selon la revendication précédente, **caractérisée en ce que** ledit élément percuteur (8) délimite un rétrécissement (RC), dans lequel ladite sortie (LP) est délimitée en alignement avec celui-ci, ledit élément d'obturation (OT) traversant ledit rétrécissement (RC) et en particulier présentant une forme sensiblement tronconique.

50. Vanne thermostatique selon la revendication 45 ou 46, **caractérisée en ce que** ledit élément d'obturation (OT) est associé audit logement extérieur (6A, 6D) à travers un élément de support (ES) délimitant une zone de repos (ES 1) pour ledit élément élastique (7), ledit élément de support (ES) comportant un arbre (ES2) sur lequel est inséré ledit élément d'obturation (OT).

51. Vanne thermostatique selon une ou plusieurs des revendications 38 à 50, **caractérisée en ce qu'**au moins un logement (2A) pour un élément d'étanchéité, en particulier du type joint torique (OR), est délimité sur la surface extérieure dudit corps (2).

52. Vanne thermostatique selon une ou plusieurs des revendications 38 à 51, **caractérisée en ce qu'**il fournit des moyens d'ajustement du point de fonctionnement de ladite vanne (DC).

53. Vanne thermostatique selon les revendications 39 et 41, **caractérisée en ce que** lesdits moyens de régulation et/ou de stabilisation d'écoulement de fluide (30) sont en outre placés dans ledit même conduit (CT).

54. Vanne thermostatique selon la revendication 41, **caractérisée en ce que** ledit dispositif de régulation thermostatique (1) est placé à proximité de ladite première ouverture (3) prévue dans ledit même conduit (CT), en particulier une ouverture supérieure, et ladite unité d'hélice (10) est placée à proximité de ladite seconde ouverture (4) prévue dans ledit même conduit (CT), en particulier une ouverture inférieure.

55. Vanne thermostatique selon une ou plusieurs des revendications 38 à 54, **caractérisée en ce qu'**il fournit des moyens de raccordement (MA) appropriés, ajustés sur les deux extrémités dudit corps (CT).

56. Vanne thermostatique selon la revendication 40, **caractérisée en ce que** ladite unité de détection (10) comprend en outre un diffuseur (12), en particulier placé en amont de ladite hélice (13).

57. Utilisation du procédé de commande selon une ou plusieurs des revendications 29 à 37 et/ou de la vanne thermostatique selon une ou plusieurs des revendications 38 à 56, dans des chaudières pour chauffer de l'eau, en particulier dans un environnement domestique.
